# EUROPEAN PATENT APPLICATION

(11) **EP 2 477 412 A1**
(43) Date of publication of application: **18.07.2012**
(21) Application number: 12151334.5
(22) Date of filing: 17.01.2012
(51) Int. Cl.: H04N 13/04, G09G 3/34

(54) **A method and a system for 3D video display systems**

(30) Priority: 18.01.2011 TR 201100484
(71) Applicant: Vestel Elektronik Sanayi ve Ticaret A.S., 45030 Manisa (TR)
(72) Inventor: Kirisken, Barbaros, 45030 Manisa (TR); Yatir, Mustafa Nevzat, 45030 Manisa (TR); Kahramanoglu, Gurmen, 45030 Manisa (TR)
(74) Representative: Cayli, Hülya

(57) **Abstract**

Present invention provides a system and a method for three-dimensional video display systems. The system comprises at least one display device (L) which comprises at least one backlight unit (4b); at least one shutter glasses (G) which comprise at least one detection unit (5) which detects backlight synchronization signals, at least one right shutter glass (6a), at least one left shutter glass (6b), at least one controller (7) which processes the backlight signals and determines which glass is closed and closure duration of the closed glass, at least one timer (8) to process the determined closure duration. The method comprises detecting backlight signal by the detection unit (5), determining to which eye the displayed image belongs and determining the duration by the controller (7), closing the transparency of a shutter glass.

## Description

### Technical Field

Present invention relates to three-dimensional (3D) video display systems where shutter glasses are used.

### Prior Art

Human brain gets depth information from two separate pictures seen by two eyes. Thus, in 3D systems, it is needed to send separate pictures to each eye from one display. A very convenient and backward compatible way to achieve that goal is to display left eye picture and right eye picture sequentially, with a speed that human can not detect, closing left eye, by means of shutter glasses, when the frame of the right eye is displayed and vice versa. Shutter glasses are a kind of active glasses used in 3D video display systems. The published patent application No JP08331603A of the prior art discloses exemplary embodiments of shutter glasses in 3D video display systems. Shutter glasses conventionally use small LC (liquid crystal) glasses to close or darken the eye.

As expected, the glasses need to know which eye must be closed according to frame at that particular time on the display. That information must be sent from display unit to glasses. Several ways such as infrared, radio frequency, DLP-Link or Bluetooth transmitters are used to synchronize shutter glasses with display unit. So, those shutter glasses needs special synchronizing equipment inside the display.

In the published patent application No WO2009069026A2 of the prior art, 3D visualization is disclosed. The LCD display system described in said patent application further comprises a pair of 3D shutter glasses. The control signal which is generated by the controller of display to control the optical states of the shutter glasses may be supplied to the pair of shutter glasses through wires or wirelessly.

In the published patent application No JP2010062767A2 of the prior art, a 3D display device which transmits shutter-opening/closing control information as a radio frequency (RF) signal from an RF transmitter in the display device to liquid-crystal shutter glasses is described. The information sent by RF transmitter makes the shutter glasses open or close the necessary shutter such as left shutter or right shutter.

### Brief Description of the Invention

According to the invention, a system and a method for three-dimensional video display systems are provided. The three-dimensional video display system comprises at least one display device which comprises at least one main controller, at least one inverter/converter, at least one cell driver circuit and at least one backlight unit; at least one shutter glasses which comprise at least one detection unit which detects backlight synchronization signals, at least one right shutter glass, at least one left shutter glass, at least one controller which processes the backlight signals and determines which glass will be closed and closure duration of the closed glass, at least one timer to process the determined closure duration. The method comprises detecting backlight signal by the detection unit, determining to which eye the displayed image belongs and determining the duration by the controller, closing the transparency of a shutter glass.

### Object of the Invention

The object of the present invention is to provide a shutter glasses system application for 3D video display devices.

Another object of the invention is to eliminate extra transmitter necessity for synchronization in shutter glasses applications in 3D video display systems.

Another object of the invention is to reduce the manufacturing costs of the 3D video display systems.

Another object of the invention is to increase the picture quality which is seen by a user in 3D video display systems.

### Description of Figures

The exemplary 3D video display system of the invention and the relevant exemplary shutter glasses are illustrated in the annexed figures wherein:
Figure 1; shows a block diagram of the 3D display system,
Figure 2; shows an exemplary shutter glasses.

The reference numbers as used in figures may possess the following meanings;

| | |
|---|---|
| Display device | (L) |
| Shutter glasses | (G) |
| Main controller | (1) |
| Inverter/Converter | (2) |
| Cell driver circuit | (3) |
| Display panel | (4) |
| Cell | (4a) |
| Backlight unit | (4b) |
| Detection unit | (5) |
| Right shutter glass | (6a) |
| Left shutter glass | (6b) |
| Controller | (7) |
| Timer | (8) |

### Disclosure of the Invention

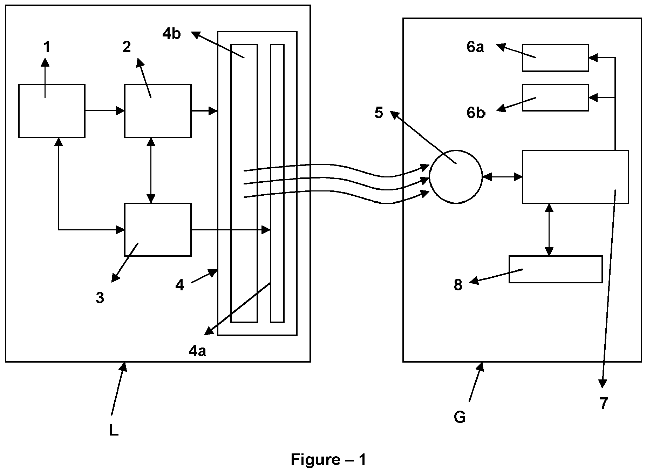

Present invention discloses a shutter glasses application for 3D video display devices. Figure 1 shows an exemplary block diagram of a 3D video display system according to present invention. The system comprises a display device (L) and a shutter glasses (G). The display device (L) is preferably an ordinary liquid-crystal display device (LCD) which comprises at least one main controller (1), at least one inverter/converter (2), at least one cell driver circuit (3) and at least one display panel (4). The display panel (4) further comprises at least one cell (4a) and at least one backlight unit (4b) which provides backlight for images displayed on LCD.

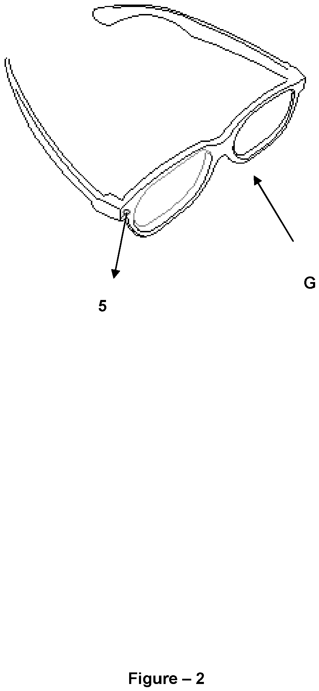

Figure 2 shows an exemplary shutter glasses (G) according to the present invention. The glasses (G) comprise at least one detection unit (5), at least one right shutter glass (6a) and at least one left shutter glass (6b), at least one controller (7) and at least one timer (8).

In the 3D video display devices as described in prior art, for depth sense left eye image and right eye image are shown sequentially with a period and delay. Moreover, said main controller (1) embeds, into the backlight signal, a synchronization signal which is transmitted as a backlight deviation via said backlight unit (4b) and LCD backlight dimming signal comprises this synchronization signals (special code packets) which consist of the information as to which eye image is displayed (right or left) at that moment and timing information such as duration of each frame (right or left or both). Thus the detection unit (5) of the system described in the present invention detects the LCD backlight signals. Therefore, necessity for a transmitter in the display device (L) is eliminated and production costs are reduced. Detected signals are processed by the controller (7) to understand the information received from display device (L). According to the information, the transparency of the right shutter glass (6a), left shutter glass (6b) or both are closed. Since the glasses (G) comprise timer (8), the transparency close duration which is received by backlight signal and processed by controller (7) is determined, and according to determined duration, the relevant shutter glass (6a or 6b) remains with closed transparency.

The shutter glasses (G) according to present invention has a detection unit (5) of high speed semiconductor such as photodiode or phototransistor that has visible light spectra. Detection unit (5) on the glasses must have a detection spectrum that is very near to color gamut of the display. After correct synchronization signal is detected from display backlight, it will be analyzed with the controller (7) on the glasses (G) to determine which frame is displayed (right or left) and to determine timing information. The internal timer (8) is set or reset according to time synchronization detected. So that if glasses (G) fail to detect the packets the system can still work.

3D videos are captured by only two cameras which are perpendicular. Thus, to watch a 3D video with a high picture quality, user should stay at a perpendicular angle to the display device (L). If the user stays at an angle to the display device (L), picture quality can drop and 3D effect may be decreased or lost. According to the system provided by present invention, since duration of transparency closure for left image and right image of displayed video can be adjusted by timer (8) in the shutter glasses (G), 3D video displayed on the screen can be watched at different viewing angles without reduced picture quality and reduced 3D effect. For that purpose, the position of the user should be detected by the glasses (G). This problem is overcome by detecting different modulations on the backlight emitted by display device (L). For detecting different modulations, display device (L) backlight is modulated piecewise as right, middle and left parts of the display which have different modulations. In an embodiment of the invention, the intensities of the backlight received from at least two different parts of the display are measured by detection unit (5) and compared to determine the relative position of the user with respect to the display.

It is also possible to enhance perceived 3D image in accordance with the determined position of the user. Normally, when the user is at a perpendicular position in relation to the display, the closing duration of left glass and right glass is adjusted to be equal. However, if the user is not at perpendicular position in relation to display, the 3D perception decreases. To enhance 3D perception, ratio of closing duration of the left glass to closing duration of the right glass are preferably adjusted in accordance with user's relative position to the display.

In a further embodiment of the invention, the determined position of the user can be sent to display device (L). The display device (L) may enhance the perceived image in accordance with the determined position and 3D perception degradation because of oblique position of the user is eliminated.

In another embodiment of the invention, the phase shift of emitting light can be used as a reference for user's position. When the position of the user changes, a phase shift may be observed during said position change. Using a fast photo-sensor, the phase shift may be realized and position change may be determined accordingly.

## Claims

1. A three-dimensional video display system comprising
- at least one display device (L) which comprises at least one main controller (1), at least one inverter/converter (2), at least one cell driver circuit (3) and at least one backlight unit (4b);
- at least one shutter glasses (G);
**characterized in that**; said shutter glasses (G) comprise at least one detection unit (5) which detects backlight synchronization signals, at least one right shutter glass (6a), at least one left shutter glass (6b), at least one controller (7) which processes the backlight signals and determines which glass will be closed and closure duration of the closed glass, at least one timer (8) to process the determined closure duration.

2. A system according to claim 1 **characterized in that**; display device (L) is a liquid-crystal display device.

3. A system according to claim 1 **characterized in that**; detection unit (5) is a high speed semiconductor.

4. A system according to claim 3 **characterized in that**; high speed semiconductor is a photodiode.

5. A system according to claim 3 **characterized in that**; high speed semiconductor is a phototransistor.

6. A system according to claim 1 **characterized in that**; the synchronized backlight signals comprise the information as to which eye image is displayed at that moment and timing information.

7. A method for three-dimensional video display system which comprises
- at least one display device (L) which comprises at least one main controller (1), at least one inverter/converter (2), at least one cell driver circuit (3) and at least one backlight unit (4b);
- at least one shutter glasses (G);
**characterized in that**; the method comprises,
- embedding, into a backlight signal, a synchronization signal which is transmitted as a backlight deviation via said backlight unit (4b), by said main controller (1);
- detecting said synchronization signal by a detection unit (5) in the shutter glasses (G);
- determining to which eye a displayed image belongs to and the duration of said displayed image from said detected synchronization signal by a controller (7) in the shutter glasses (G);
- closing the transparency of a right shutter glass (6a), a left shutter glass (6b) or both according to said detected synchronization signal.

8. A method according to claim 7 **characterized in that**; the method further comprises adjusting a ratio of closing duration of the right shutter glass (6a) to closing duration of the left shutter glass (6b) by a timer (8) in the shutter glasses (G).

9. A method according to claim 7 **characterized in that**; the method further comprises detecting the position of a user.

10. A method according to claim 9 **characterized in that**; the method further comprises detecting phase shifts of the emitted light by the display device (L).

11. A method according to claim 9 **characterized in that**; the method further comprises detecting different modulations on the backlight emitted by the display device (L).

12. A method according to claim 11 **characterized in that**; the method further comprises modulating the backlight emitted by the display device (L) piecewise as right, middle and left parts of the video have different modulations.

13. A method according to claim 12 **characterized in that** the method further comprises measuring and comparing intensities of the backlight received from at least two different parts of the display by detection unit (5).

14. A method according to claim 9 **characterized in that**; the method further comprises sending the detected position of the user to display device (L).

15. A method according to claim 14 **characterized in that**; the method further comprises enhancing the displayed image in accordance with the detected position.
